# EUROPEAN PATENT APPLICATION

(11) **EP 2 952 534 A1**
(43) Date of publication of application: **09.12.2015**
(21) Application number: 14745581.0
(22) Date of filing: 28.01.2014
(51) Int. Cl.: C08G 59/14, C08G 59/26

(54) **EPOXY RESIN, METHOD FOR PRODUCING EPOXY RESIN, EPOXY RESIN COMPOSITION, AND CURED ARTICLE**

(30) Priority: 31.01.2013 JP 2013017502; 18.07.2013 JP 2013149853
(71) Applicant: Nagase ChemteX Corporation, Osaka-shi, Osaka 550-8668 (JP)
(72) Inventor: SHIRAKI Yoshihiko, Tatsuno-shi Hyogo 679-4124 (JP); HOSOMI Tetsuya, Tatsuno-shi Hyogo 679-4124 (JP)
(74) Representative: Hoffmann Eitle
(86) International application number: PCT/JP2014/051741
(87) International publication number: WO 2014/119533

(57) **Abstract**

An object of the present invention is to provide an epoxy resin that does not release compounds suspected of being endocrine-disrupting chemicals, and can be used as a starting material for cured products having excellent surface hardness, excellent chemical resistance, excellent lightfastness, and excellent flexibility. The epoxy resin of the present invention has a number-average molecular weight from 400 to 100,000, and is represented by the following general formula (1) : 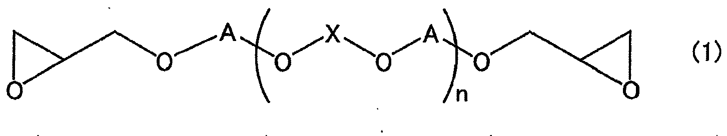 wherein A represents a heterocyclic structural unit.

## Description

### TECHNICAL FIELD

The present invention relates to a high molecular weight epoxy resin having a heterocyclic structure, a method of producing the epoxy resin, an epoxy resin composition containing the epoxy resin, and a cured product thereof.

### BACKGROUND ART

Epoxy resins are generally cured with curing agents to form cured products that are excellent in mechanical properties, water resistance, chemical resistance, heat resistance, electrical properties and the like, and therefore they are used in a wide range of fields such as adhesives, paints and coatings, laminates, molding materials, and casting materials. Liquid and solid bisphenol A epoxy resins, which are derived from bisphenol A, are the epoxy resins that have been most used industrially.

However, bisphenol A, which is a starting material for the bisphenol A epoxy resins, is known to be a compound which has been suggested as a suspected endocrine-disrupting chemical (environmental hormone). For this reason, there is concern over the release of bisphenol A from various industrial products and consumer goods which are made from bisphenol A epoxy resins. As a consequence there is increasing demand for epoxy resins that do not use bisphenol A and can be used as a replacement for bisphenol A epoxy resins. In response to this, low molecular weight epoxy resins (epoxy compounds) having a heterocyclic structure are known as one of potential epoxy resins which are prepared without using a compound suspected of being an endocrine-disrupting chemical and could have the same properties as bisphenol A epoxy resins.

However, the cured products obtained by curing low molecular weight epoxy resins (epoxy compounds) having a heterocyclic structure have the problem of inferior flexibility. In addition, the cured products of bisphenol A epoxy resins and the cured products of low molecular weight epoxy resins (epoxy compounds) having a heterocyclic structure have the problem of unsatisfactory surface hardness, chemical resistance, and lightfastness in some applications.

Thus, there has been a need for the development of epoxy resins, as a replacement for bisphenol A epoxy resins and low molecular weight epoxy resins (epoxy compounds) having a heterocyclic structure, which are prepared without using a compound suspected of being an endocrine-disrupting chemical and can provide cured products having excellent surface hardness, excellent chemical resistance, excellent lightfastness, and excellent flexibility.

Patent Literature 1 proposes, as such a replacement, a resin prepared by esterifying with phosphoric acid a modified resin having a structure formed by the reaction of a bisphenol-free novolac epoxy resin and a monovalent active hydrogen compound. However, since the novolac epoxy resin which is the starting material for this resin is polyfunctional, problems may occur such as gelation during the preparation of the resin, and it has been difficult to manufacture this resin stably on an industrial scale.

### CITATION LIST

### PATENT LITERATURE

Patent Literature 1: JP-A 2002-97345

### SUMMARY OF INVENTION

### TECHNICAL PROBLEM

An object of the present invention is to provide an epoxy resin that does not release compounds suspected of being endocrine-disrupting chemicals, and can be used as a starting material for cured products having excellent surface hardness, excellent chemical resistance, excellent lightfastness, and excellent flexibility. Another object of the present invention is to provide an epoxy resin production method that can simply and conveniently produce such an epoxy resin.

### SOLUTION TO PROBLEM

As a result of intensive investigations, the present inventors have found that by using an epoxy resin obtained by increasing the molecular weight of a low molecular weight epoxy resin (epoxy compound) having a heterocyclic structure, cured products having excellent surface hardness, excellent chemical resistance, excellent lightfastness, and excellent flexibility can be provided, and the risk of release of compounds suspected of being endocrine-disrupting chemicals can also be eliminated. The present invention has been achieved based on these findings.

Specifically, the epoxy resin of the present invention is characterized by being represented by the following general formula (1): 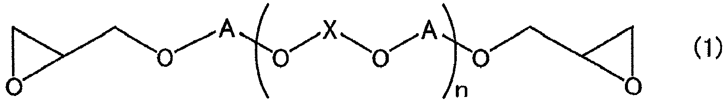 wherein A represents a heterocyclic structural unit; X represents any one structure selected from the group consisting of the following general formulas (2) to (6) and (9) : 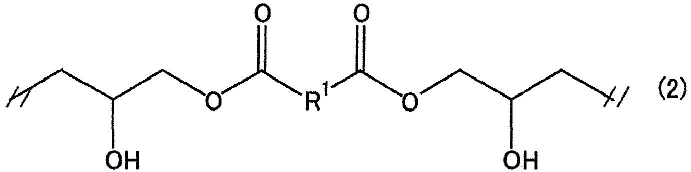 wherein R' represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 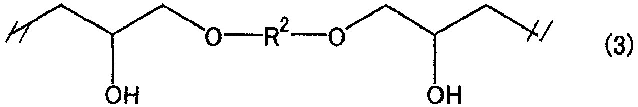 wherein R² represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 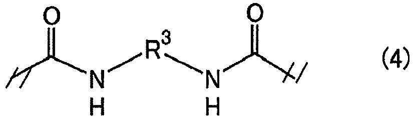 wherein R³ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 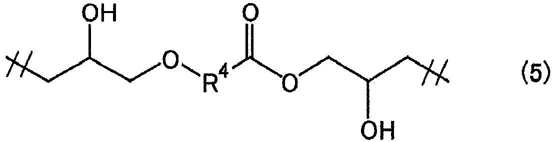 wherein R⁴ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 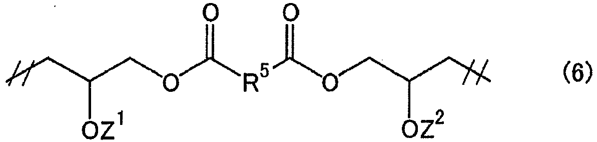 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 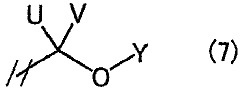 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 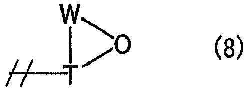 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and 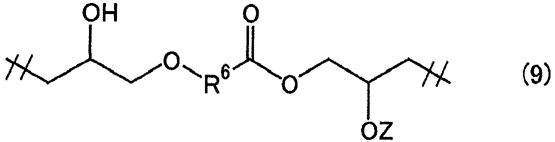 wherein R⁶ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents a structure represented by the following general formula (7) or general formula (8): 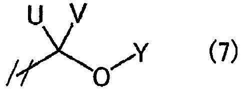 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 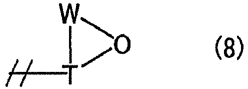 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; and
n represents 0.5 to 200,
the epoxy resin having a number-average molecular weight of 400 to 100,000.

The epoxy resin of the present invention is preferably obtained by: reacting an epoxy compound represented by the following general formula (10): 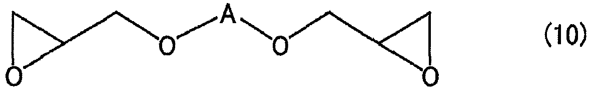 wherein A represents a heterocyclic structural unit, with a dicarboxylic acid compound, a polyol compound, a hydroxycarboxylic acid, a compound represented by the following general formula (11): 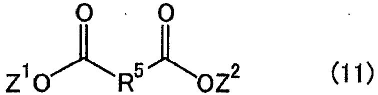 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 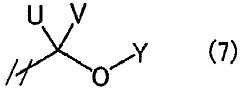 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 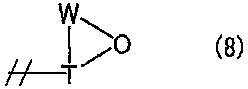 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted,
or a compound represented by the following general formula (12) : 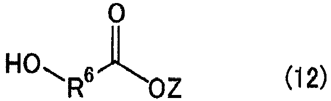 wherein R⁶ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents H or a structure represented by the following general formula (7) or general formula (8): 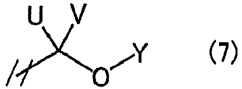 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 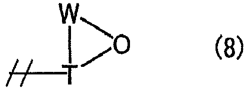 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, or
reacting a diisocyanate with a heterocyclic diol represented by the following general formula (13):

**HO-A-OH** **(13)**

wherein A represents a heterocyclic structural unit; and
further reacting the resulting product with a compound containing an epoxy group and a hydroxyl group or an epihalohydrin.

In the epoxy resin of the present invention, A is preferably represented by any of the following formulas (14) to (17) : 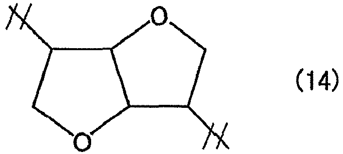 wherein the ring hydrogen atoms may be partially or fully substituted, 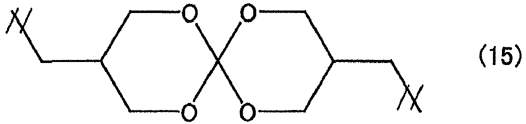 wherein the ring hydrogen atoms and the hydrogen atoms on the carbon chain each independently may be partially or fully substituted, 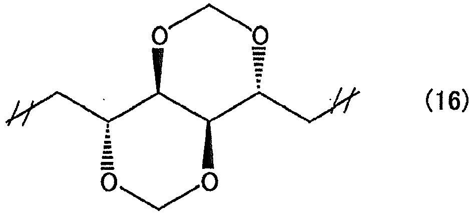 wherein the ring hydrogen atoms and the hydrogen atoms on the carbon chain each independently may be partially or fully substituted, and 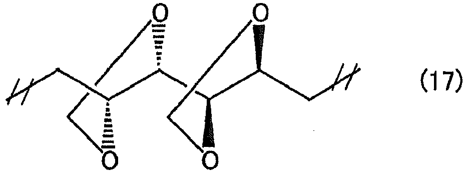 wherein the ring hydrogen atoms and the hydrogen atoms on the carbon chain each independently may be partially or fully substituted.

The method of producing an epoxy resin of the present invention is characterized by: reacting an epoxy compound represented by the following general formula (10): 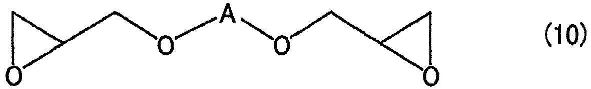 wherein A represents a heterocyclic structural unit, with a dicarboxylic acid compound, a polyol compound, a hydroxycarboxylic acid, a compound represented by the following general formula (11): 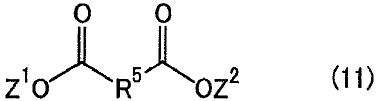 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 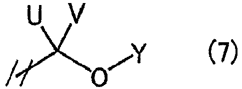 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 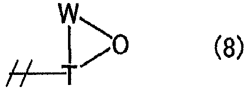 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted,
or a compound represented by the following general formula (12) : 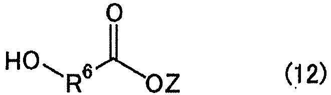 wherein R⁶ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents H or a structure represented by the following general formula (7) or general formula (8): 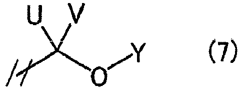 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 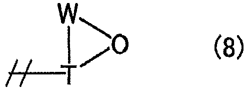 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, or
reacting a diisocyanate with a heterocyclic diol represented by the following general formula (13):

**HO-A-OH** **(13)**

wherein A represents a heterocyclic structural unit; and
further reacting the resulting product with a compound containing an epoxy group and a hydroxyl group or an epihalohydrin.

In the method of producing an epoxy resin of the present invention, A is preferably represented by any of the following formulas (14) to (17): 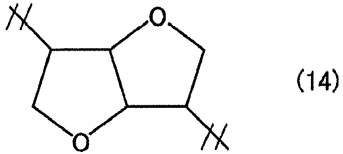 wherein the ring hydrogen atoms may be partially or fully substituted, 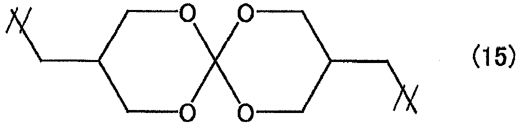 wherein the ring hydrogen atoms and the hydrogen atoms on the carbon chain each independently may be partially or fully substituted, 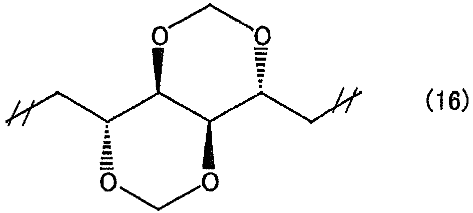 wherein the ring hydrogen atoms and the hydrogen atoms on the carbon chain each independently may be partially or fully substituted, and 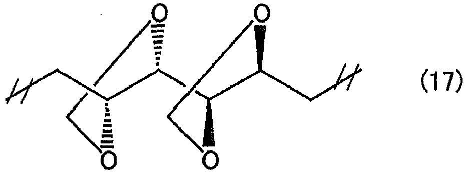 wherein the ring hydrogen atoms and the hydrogen atoms on the carbon chain each independently may be partially or fully substituted.

The epoxy resin composition of the present invention is characterized by containing the epoxy resin of the present invention with a curing agent and/or a curing catalyst.

Moreover, the cured product of the present invention is characterized by being obtained by curing the epoxy resin composition of the present invention.

### ADVANTAGEOUS EFFECTS OF INVENTION

The epoxy resin of the present invention, which is a high molecular weight epoxy resin having a heterocyclic structure (heterocyclic structural unit), is very well suited as a starting material for obtaining cured products having excellent surface hardness, chemical resistance, lightfastness, and flexibility, and also does not release compounds suspected of being endocrine-disrupting chemicals.

The epoxy resin production method of the present invention can simply, conveniently, and suitably produce the epoxy resin of the present invention and can also easily control epoxy equivalent weight and the like.

Moreover, the epoxy resin composition of the present invention, which contains the epoxy resin of the present invention, is very well suited as a starting material for obtaining cured products having excellent surface hardness, chemical resistance, lightfastness, and flexibility, and also does not release compounds suspected of being endocrine-disrupting chemicals.

Furthermore, the cured product of the present invention has excellent surface hardness, chemical resistance, lightfastness, and flexibility and also does not release compounds suspected of being endocrine-disrupting chemicals.

### DESCRIPTION OF EMBODIMENTS

### « Epoxy resin »

The epoxy resin of the present invention will be described first.

The epoxy resin of the present invention is an epoxy resin characterized by being represented by the following general formula (1) : 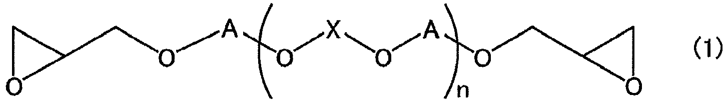 wherein A represents a heterocyclic structural unit;
X represents any one structure selected from the group consisting of the following general formulas (2) to (6) and (9) : 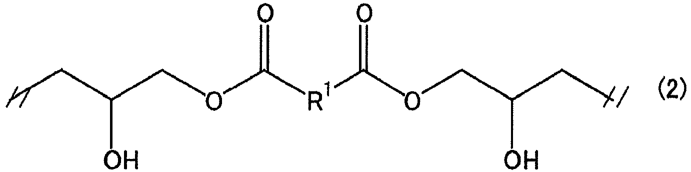 wherein R¹ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 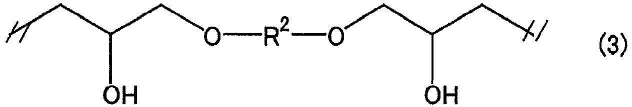 wherein R² represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 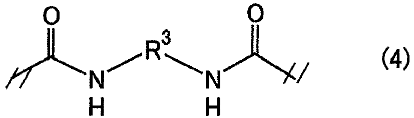 wherein R³ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 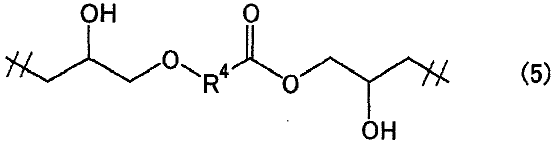 wherein R⁴ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 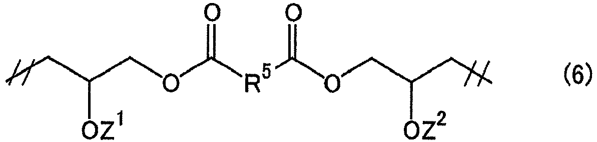 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 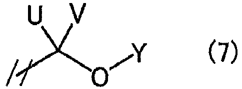 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 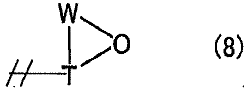 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and 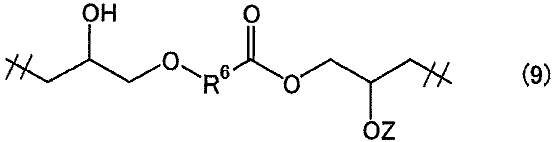 wherein R⁶ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents a structure represented by the following general formula (7) or general formula (8): 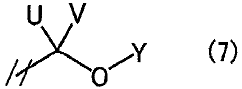 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 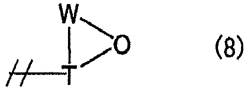 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; and
n represents 0.5 to 200,
the epoxy resin having a number-average molecular weight of 400 to 100,000.

The term "heterocycle" or "heterocyclic (ring)" as used in the present invention means a cyclic or ring structure that is formed of a carbon atom and at least one atom selected from the group consisting of an oxygen atom, nitrogen atom, sulfur atom, phosphorus atom, silicon atom, boron atom, selenium atom, and tellurium atom.

Moreover, in the Description, among the epoxy resins represented by general formula (1), those having the structure represented by general formula (2) as X are also referred to as polyester-type epoxy resins; those having the structure represented by general formula (3) as X are also referred to as polyether-type epoxy resins; those having the structure represented by general formula (4) as X are also referred to as polyurethane-type epoxy resins; those having the structure represented by general formula (5) as X are also referred to as polyester polyether-type epoxy resins; those having the structure represented by general formula (6) as X are also referred to as modified polyester-type epoxy resins; and those having the structure represented by general formula (9) as X are also referred to as modified polyester polyether-type epoxy resins.

In the epoxy resin of the present invention, A in general formula (1) is not particularly limited as long as it is a structural unit containing a heterocyclic ring, and examples include heterocyclic structural units represented by formulas (14) to (17) below; heterocyclic structural units derived from oxygen-containing heterocyclic compounds such as furan, tetrahydrofuran, tetrahydropyran, dioxane, benzopyran, and xanthene compounds; heterocyclic structural units derived from sulfur-containing heterocyclic compounds such as thiophene and tetrahydrothiophene compounds; and heterocyclic structural units derived from nitrogen-containing heterocyclic compounds such as piperidine, piperazine, pyrrolidine, pyrrole, pyridine, pyrazine, pyrimidine, triazole, pyrazole, imidazole, indole, oxazole, and thiazole compounds.

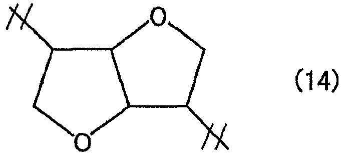

In formula (14), the ring hydrogen atoms may be partially or fully substituted.

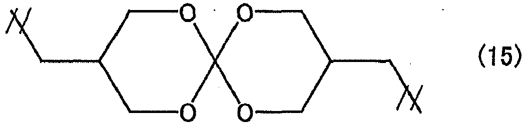

In formula (15), the ring hydrogen atoms and the hydrogen atoms on the carbon chain each independently may be partially or fully substituted.

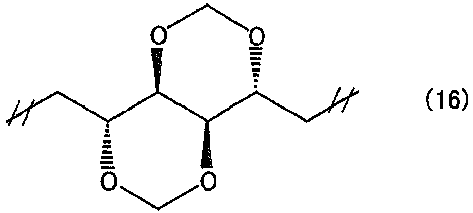

In formula (16), the ring hydrogen atoms and the hydrogen atoms on the carbon chain each independently may be partially or fully substituted.

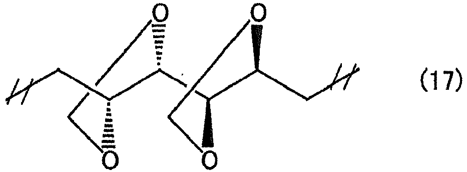

In formula (17), the ring hydrogen atoms and the hydrogen atoms on the carbon chain each independently may be partially or fully substituted.

In the epoxy resin, A in general formula (1) is preferably a heterocyclic structural unit represented by any of the preceding formulas (14) to (17). The reason for this is that since then two or more heterocyclic rings are located close to one another, epoxy resin compositions containing such an epoxy resin can be cured to provide cured products having exceptionally good properties such as surface hardness and heat resistance.

Examples of substituents to replace hydrogen atoms on the carbon chain or ring hydrogen atoms in formulas (14) to (17) include alkyl groups (for example, C₁₋₂₀ alkyl groups such as a methyl group, ethyl group, propyl group, isopropyl group, butyl group, s-butyl group, and t-butyl group); cycloalkyl groups (for example, C₃₋₁₀ cycloalkyl groups such as a cyclopentyl group and cyclohexyl group); cycloalkenyl groups (for example, C₃₋₁₀ cycloalkenyl groups such as a cyclopentel group and cyclohexel group) ; heterocyclic groups (for example, C₂₋₁₀ heterocyclic groups containing heteroatoms such as an oxygen atom, nitrogen atom, and sulfur atom) ; aryl groups [for example, C₆₋₁₀ aryl groups such as a phenyl group and alkylphenyl groups (e.g. a methylphenyl group (tolyl group) and dimethylphenyl group (xylyl group))]; aralkyl groups (for example, C₆₋₁₀ aryl-C₁₋₄ alkyl groups such as a benzyl group and phenethyl group) ; hydrocarbon groups such as a methylene group, vinyl group, and allyl group; alkoxy groups (for example, C₁₋₄ alkoxy groups such as a methoxy group); a hydroxyl group; hydroxy(poly)alkyleneoxy groups (for example, hydroxy(poly)C₂₋₄-alkyleneoxy groups); acyl groups (for example, C₁₋₆ acyl groups such as an acetyl group) ; an oxy group; a thioxy group; a phosphino group; halogen groups (for example, a fluoro group and chloro group) ; an amino group; an imino group; an N-oxide group; a nitro group; and a cyano group. The hydrogen atoms on the carbon chain and the ring hydrogen atoms each may be partially or fully substituted.

In the epoxy resin, X represents any one structure selected from the group consisting of the aforementioned general formulas (2) to (6) and (9).

R¹, R², R³, R⁴, R⁵, and R⁶ in general formulas (2) to (6) and (9) are each a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and each of R¹, R³, R⁴, and R⁶ may also be a single bond.

Examples of heteroatoms to partially replace the carbon atoms include an oxygen atom, nitrogen atom, sulfur atom, phosphorus atom, silicon atom, boron atom, selenium atom, and tellurium atom.

Moreover, examples of substituents to replace hydrogen atoms on the carbon chain or ring hydrogen atoms include alkyl groups (for example, C1-20 alkyl groups such as a methyl group, ethyl group, propyl group, isopropyl group, butyl group, s-butyl group, and t-butyl group); cycloalkyl groups (for example, C₃₋₁₀ cycloalkyl groups such as a cyclopentyl group and cyclohexyl group); cycloalkenyl groups (for example, C₃₋₁₀ cycloalkenyl groups such as a cyclopentel group and cyclohexel group); heterocyclic groups (for example, C₂₋₁₀ heterocyclic groups containing heteroatoms such as an oxygen atom, nitrogen atom, and sulfur atom); aryl groups [for example, C₆₋₁₀ aryl groups such as a phenyl group and alkylphenyl groups (e.g. a methylphenyl group (tolyl group) and dimethylphenyl group (xylyl group))]; aralkyl groups (for example, C₆₋₁₀ aryl-C₁₋₄ alkyl groups such as a benzyl group and phenethyl group); hydrocarbon groups such as a methylene group, vinyl group, and allyl group; alkoxy groups (for example, C₁₋₄ alkoxy groups such as a methoxy group) ; a hydroxyl group; hydroxy (poly) alkyleneoxy groups (for example, hydroxy(poly)C₂₋₄-alkyleneoxy groups); acyl groups (for example, C₁₋₆ acyl groups such as an acetyl group); an oxy group; a thioxy group; a phosphino group; halogen groups (for example, a fluoro group and chloro group) ; an amino group; an imino group; an N-oxide group; a nitro group; and a cyano group. The hydrogen atoms on the carbon chain and the ring hydrogen atoms each may be partially or fully substituted.

Z¹, Z², and Z in general formulas (6) and (9) are each a structure represented by the aforementioned general formula (7) or general formula (8). Moreover, each of Z¹ and Z² may be H, but at least one of Z¹ or Z² is a structure represented by general formula (7) or general formula (8).

V, U, Y, W, and T in general formulas (7) and (8) each represent a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, each of U and V may also be hydrogen, and each of Y and W may also be a group formed by introducing a carbonyl group into the C1-20 acyclic hydrocarbon group or the C3-20 cyclic hydrocarbon group.

Examples of heteroatoms to partially replace the carbon atoms as described above include an oxygen atom, nitrogen atom, sulfur atom, phosphorus atom, silicon atom, boron atom, selenium atom, and tellurium atom.

Moreover, examples of substituents to replace hydrogen atoms on the carbon chain or ring hydrogen atoms include alkyl groups (for example, C₁₋₂₀ alkyl groups such as a methyl group, ethyl group, propyl group, isopropyl group, butyl group, s-butyl group, and t-butyl group); cycloalkyl groups (for example, C₃₋₁₀ cycloalkyl groups such as a cyclopentyl group and cyclohexyl group); cycloalkenyl groups (for example, C₃₋₁₀ cycloalkenyl groups such as a cyclopentel group and cyclohexel group); heterocyclic groups (for example, C₂₋₁₀ heterocyclic groups containing heteroatoms such as an oxygen atom, nitrogen atom, and sulfur atom); aryl groups [for example, C₆₋₁₀ aryl groups such as a phenyl group and alkylphenyl groups (e.g. a methylphenyl group (tolyl group) and dimethylphenyl group (xylyl group))]; aralkyl groups (for example, C₆₋₁₀ aryl-C₁₋₄ alkyl groups such as a benzyl group and phenethyl group); hydrocarbon groups such as a methylene group, vinyl group, and allyl group; alkoxy groups (for example, C₁₋₄ alkoxy groups such as a methoxy group) ; a hydroxyl group; hydroxy (poly) alkyleneoxy groups (for example, hydroxy(poly)C₂₋₄-alkyleneoxy groups); acyl groups (for example, C₁₋₆ acyl groups such as an acetyl group) ; an oxy group; a thioxy group; a phosphino group; halogen groups (for example, a fluoro group and chloro group) ; an amino group; an imino group; an N-oxide group; a nitro group; and a cyano group. The hydrogen atoms on the carbon chain and the ring hydrogen atoms each may be partially or fully substituted.

In the epoxy resin represented by general formula (1), n (degree of polymerization) is 0. 5 to 200. This n is preferably 0.5 to 20, and more preferably 0.5 to 10.

When n ranges from 0.5 to 200, the epoxy resin of formula (1) has a number-average molecular weight of 400 to 100,000.

The n for the epoxy resin of the present invention is the average value for the epoxy resin as a whole.

The number-average molecular weight of the epoxy resin is 400 to 100,000. The number-average molecular weight is preferably 400 to 15,000, and more preferably 400 to 2,000.

If the number-average molecular weight is less than 400, such an epoxy resin, after curing, may have too high crosslink density and thereby become brittle. At above 100,000, a satisfactory crosslink density may not be obtained after curing, so that properties such as surface hardness and chemical resistance may be unsatisfactory.

In the Description, number-average molecular weight refers to the value determined by gel permeation chromatography (also referred to below as GPC).

The epoxy equivalent weight of the epoxy resin is not particularly limited, but is preferably 200 to 8,000 g/eq, and more preferably 200 to 3,000 g/eq. If the epoxy equivalent weight is less than 200 g/eq, such an epoxy resin, after curing, may have too high crosslink density and thereby become brittle. At above 8,000 g/eq, a satisfactory crosslink density may not be obtained after curing, so that properties such as surface hardness and chemical resistance may be unsatisfactory.

The epoxy equivalent weight values are determined based on JIS K 7236.

The epoxy resin of the present invention can be prepared, for example, by the method of producing an epoxy resin of the present invention.

The method of producing an epoxy resin of the present invention will be described in the following.

### « Method of producing epoxy resin »

The method of producing an epoxy resin of the present invention is characterized by: reacting an epoxy compound represented by the following general formula (10): 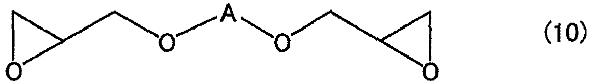 wherein A represents a heterocyclic structural unit, with a dicarboxylic acid compound, a polyol compound, a hydroxycarboxylic acid, a compound represented by the following general formula (11): 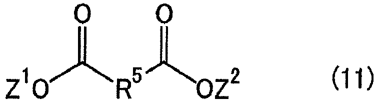 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 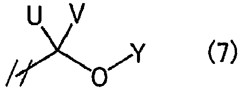 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 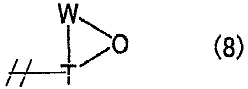 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted,
or a compound represented by the following general formula (12) : 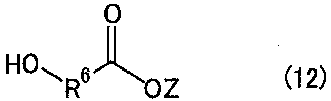 wherein R⁶ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents H or a structure represented by the following general formula (7) or general formula (8): 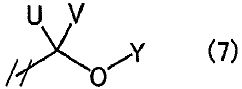 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 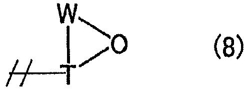 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, or
reacting a diisocyanate with a heterocyclic diol represented by the following general formula (13):

**HO-A-OH** **(13)**

wherein A represents a heterocyclic structural unit; and
further reacting the resulting product with a compound containing an epoxy group and a hydroxyl group or an epihalohydrin.

The method of producing an epoxy resin of the present invention can suitably prepare polyester-type, polyether-type, polyurethane-type, polyester polyether-type, modified polyester-type, and modified polyester polyether-type epoxy resins.

In the following, the method of producing an epoxy resin is described referring in sequence to the following different embodiments: the production of the polyester-type epoxy resin, the production of the polyether-type epoxy resin, the production of the polyurethane-type epoxy resin, the production of the polyester polyether-type epoxy resin, the production of the modified polyester-type epoxy resin, and the production of the modified polyester polyether-type epoxy resin.

In the method of producing the polyester-type epoxy resin, an epoxy compound represented by the following general formula (10) : 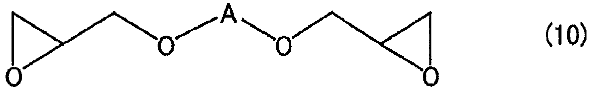 wherein A represents a heterocyclic structural unit is reacted with a dicarboxylic acid compound.

A in general formula (10) is as described above for A in general formula (1).

The epoxy compound represented by general formula (10) is not particularly limited, and examples include heterocyclic diglycidyl ethers that have a fused ring structure or a spiro ring structure in the molecule, e.g., isosorbide diglycidyl ether, isomannide diglycidyl ether, isoidite diglycidyl ether, spiroglycol diglycidyl ether, and 2,4:3,5-di-O-methylenemannitol diglycidyl ether; and heterocyclic diglycidyl ethers such as 1,4-dioxane-2,5-diglycidyl ether and 2,3:4,5-di-O-methylenegalactose diglycidyl ether.

These epoxy compounds may be used alone or in combinations of two or more.

The dicarboxylic acid compound is not particularly limited, and examples include saturated aliphatic dicarboxylic acids such as oxalic acid, malonic acid, succinic acid, glutaric acid, adipic acid, pimelic acid, suberic acid, azelaic acid, sebacic acid, and tartaric acid; unsaturated aliphatic dicarboxylic acids such as fumaric acid, maleic acid, and itaconic acid; amino acids that are dicarboxylic acids, e.g., aspartic acid and glutamic acid; cycloalkane dicarboxylic acids; cycloalkene dicarboxylic acids such as cis-4-cyclohexene-1,2-dicarboxylic acid; aromatic dicarboxylic acids such as phthalic acid, isophthalic acid, and terephthalic acid; and heterocyclic dicarboxylic acids such as 2,5-furandicarboxylic acid.

These dicarboxylic acid compounds may be used alone or in combinations of two or more.

The reaction between the epoxy compound of general formula (10) and the dicarboxylic acid compound may be carried out, for example, by mixing the epoxy compound of general formula (10) and the dicarboxylic acid compound at a reaction temperature of 50 to 200°C for 0.5 to 48 hours.

A catalyst may be present in the reaction system when this reaction is performed.

The following, for example, can be used as the catalyst: quaternary ammonium salts such as tetramethylammonium chloride and tetramethylammonium bromide, and Lewis acids such as boron trifluoride, triphenylphosphine, zinc chloride, and aluminum chloride.

These catalysts may be used alone or in combinations of two or more.

In the method of producing the polyether-type epoxy resin, an epoxy compound represented by the following general formula (10) : 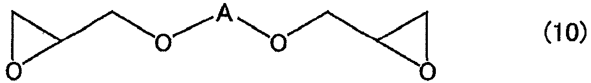 wherein A represents a heterocyclic structural unit is reacted with a polyol compound.

The same compounds as used in the production of the polyester-type epoxy resin described above can be used for this epoxy compound of general formula (10).

The polyol compound is not particularly limited, and examples include bisphenols that are not endocrine-disrupting chemicals, e.g., bisphenol F, bisphenol C, bisphenol K, bisphenol Z, bisphenol S, tetramethylbisphenol A, tetramethylbisphenol F, tetramethylbisphenol S, tetramethylbisphenol Z, dihydroxydiphenyl sulfide, and 4,4'-thiobis(3-methyl-6-tert-butylphenol); dihydroxybenzenes such as catechol, resorcinol, methylresorcinol, hydroquinone, monomethylhydroquinone, dimethylhydroquinone, trimethylhydroquinone, mono-tert-butylhydroquinone, and di-tert-butylhydroquinone; dihydroxynaphthalenes such as dihydroxynaphthalene, dihydroxymethylnaphthalene, and dihydroxydimethylnaphthalene; dihydroxyanthracenes such as dihydroxyanthracene, dihydroxymethylanthracene, and dihydroxydimethylanthracene; dihydroxyfluorenes such as 9,9'-bis(4-hydroxyphenyl)fluorene and 9,9'-bis(4-hydroxy-3-methylphenyl)fluorene; alicyclic polyols such as 1,4-cyclohexanedimethanol; heterocyclic polyols such as isosorbide, isomannide, isoidite, spiroglycol, 2,4:3,5-di-O-methylenemannitol, and 2,3:4,5-di-O-methylenegalactose; and aliphatic polyols such as sorbitol, mannitol, galactose, ethylene glycol, and glycol.

These polyol compounds may be used alone or in combinations of two or more.

The reaction between the epoxy compound of general formula (10) and the polyol compound may be carried out, for example, by mixing the epoxy compound of general formula (10) and the polyol compound at a reaction temperature of 50 to 200°C for 0.5 to 48 hours.

A catalyst may be present in the reaction system when this reaction is performed.

The following, for example, can be used as the catalyst: quaternary ammonium salts such as tetramethylammonium chloride and tetramethylammonium bromide, and Lewis acids such as boron trifluoride, triphenylphosphine, zinc chloride, and aluminum chloride.

These catalysts may be used alone or in combinations of two or more.

In the method of producing the polyurethane-type epoxy resin, a heterocyclic diol represented by the following general formula (13):

**HO-A-OH** **(13)**

wherein A represents a heterocyclic structural unit is reacted with a diisocyanate (this reaction is also referred to herebelow as reaction (1)), and the resulting reaction product is further reacted with a compound containing an epoxy group and a hydroxyl group or an epihalohydrin (this reaction is also referred to herebelow as reaction (2)).

The heterocyclic diol represented by general formula (13) is not particularly limited, and examples include heterocyclic diols that have a fused ring structure or a spiro ring structure in the molecule, e.g., isosorbide, isomannide, isoidite, spiroglycol, and 2,4:3,5-di-O-methylenemannitol; and heterocyclic diols such as 1,4-dioxane-2,5-dimethanol and 2,3:4,5-di-O-methylenegalactose.

These diols may be used alone or in combinations of two or more.

The diisocyanate is not particularly limited, and examples include: aromatic polyisocyanates, e.g., tolylene diisocyanates (TDI) such as 2,4-tolylene diisocyanate (2,4-TDI) and 2,6-tolylene diisocyanate (2,6-TDI), diphenylmethane diisocyanates (MDI) such as 4,4'-diphenylmethane diisocyanate (4,4'-MDI) and 2,4'-diphenylmethane diisocyanate (2,4'-MDI), and 1,4-phenylene diisocyanate, polymethylene polyphenylene polyisocyanate, xylylene diisocyanate (XDI), tetramethylxylylene diisocyanate (TMXDI), tolidine diisocyanate (TODI), 1,5-naphthalene diisocyanate (NDI), triphenylmethane triisocyanate, and polymeric diphenylmethane diisocyanate, as well as hydrogenated compounds of the preceding; aliphatic polyisocyanates such as ethylene diisocyanate, propylene diisocyanate, tetramethylene diisocyanate, hexamethylene diisocyanate (HDI), trimethylhexamethylene diisocyanate (TMHDI), lysine diisocyanate, and norbornane diisocyanate (NBDI); alicyclic polyisocyanates such as trans-cyclohexane-1,4-diisocyanate, isophorone diisocyanate (IPDI), bis(isocyanatomethyl)cyclohexane (H6XDI), dicyclohexylmethane diisocyanate (H12MDI), 4,4'-dicyclohexyl diisocyanate, isophorone diisocyanate, and 1,3-bis(isocyanatomethylcyclohexane); carbodiimide-modified or isocyanurate-modified polyisocyanates derived from the aforementioned aromatic polyisocyanates and hydrogenated compounds thereof, the aliphatic polyisocyanates, and the alicyclic polyisocyanates; and arylaliphatic polyisocyanates such as xylylene diisocyanate, and their hydrogenated compounds.

These diisocyanates may be used alone or in combinations of two or more.

Reaction (1) may be carried out by mixing the heterocyclic diol of general formula (13) and the diisocyanate at a reaction temperature of 10 to 120°C for 0.5 to 48 hours.

A solvent, a catalyst, and so forth may be present in the reaction system when reaction (1) is performed.

The solvent is not particularly limited, and examples include: ether solvents such as tetrahydrofuran, 1,4-dioxane, dimethoxyethane, and diethyl ether; ketone solvents such as acetone, methyl ethyl ketone, and cyclohexanone; halogenated hydrocarbon solvents such as chloroform, dichloromethane, dichloroethane, tetrachloroethane, trichloroethylene, tetrachloroethylene, and chlorobenzene; acetate solvents such as ethyl acetate, butyl acetate, cellosolve acetate, propylene glycol monomethyl ether acetate, and carbitol acetate; carbitol solvents such as cellosolve and butyl carbitol; and aromatic hydrocarbon solvents such as toluene and xylene, as well as dimethyl sulfoxide, dimethylformamide, dimethylacetamide, N-methylpyrrolidone, and acetonitrile.

These solvents may be used alone or in combinations of two or more.

For example, a Lewis acid, e.g., tetrakis(2,4-pentanedionato)zirconium(IV), boron trifluoride, triphenylphosphine, zinc chloride, or aluminum chloride, or the like can be used as the catalyst.

These catalysts may be used alone or in combinations of two or more.

The compound containing an epoxy group and a hydroxyl group is not particularly limited, and examples include glycidol; heterocyclic monoglycidyl ether monoalcohols that have a fused ring structure or a spiro ring structure in the molecule, e.g., isosorbide monoglycidyl ether, isomannide monoglycidyl ether, isoidite monoglycidyl ether, spiroglycol monoglycidyl ether, and 2,4:3,5-di-O-methylenemannitol monoglycidyl ether; heterocyclic monoglycidyl ether monoalcohols, e.g., 2,3:4,5-di-O-methylenegalactose monoglycidyl ether; and monoepoxidized glycols, e.g., ethylene glycol monoglycidyl ether.

These compounds may be used alone or in combinations of two or more.

There are no particular limitations on the epihalohydrin, and examples include epichlorohydrin, epibromohydrin, and epiiodohydrin. Preferred among these due to ease of handling and cost is epichlorohydrin.

These epihalohydrins may be used alone or in combinations of two or more.

Reaction (2) may be carried out by mixing the compound containing an epoxy group and a hydroxyl group or epihalohydrin with the reaction product obtained by reacting the diisocyanate with the heterocyclic diol of general formula (13).

In the method of producing the polyester polyether-type epoxy resin, an epoxy compound represented by the following general formula (10): 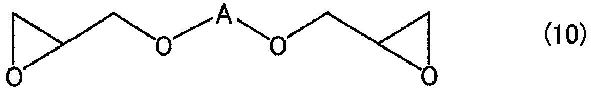 wherein A represents a heterocyclic structural unit is reacted with a hydroxycarboxylic acid.

The same compounds as used in the production of the polyester-type epoxy resin previously described can be used for this epoxy compound of general formula (10).

There are no particular limitations on the hydroxycarboxylic acid, and examples include aromatic hydroxy acids such as salicylic acid, 3-hydroxybenzoic acid, 4-hydroxybenzoic acid, vanillic acid, isovanillic acid, syringic acid, mandelic acid, benzilic acid, coumaric acid, ferulic acid, and sinapinic acid; and aliphatic hydroxy acids such as lactic acid, glycolic acid, 2-hydroxybutyric acid, 3-hydroxybutyric acid, γ-hydroxybutyric acid, mevalonic acid, ricinoleic acid, 4-hydroxycyclohexanecarboxylic acid, and 3-hydroxy-1-adamantanecarboxylic acid.

These hydroxycarboxylic acids may be used alone or in combinations of two or more.

The reaction between the epoxy compound of general
formula (10) and the hydroxycarboxylic acid may be carried out, for example, by mixing the epoxy compound of general formula (10) and the hydroxycarboxylic acid at a reaction temperature of 50 to 200°C for 0.5 to 48 hours.

A catalyst may be present in the reaction system when this reaction is performed.

The following, for example, can be used as the catalyst: quaternary ammonium salts such as tetramethylammonium chloride and tetramethylammonium bromide, and Lewis acids such as boron trifluoride, triphenylphosphine, zinc chloride, and aluminum chloride.

These catalysts may be used alone or in combinations of two or more.

In the method of producing the modified polyester-type epoxy resin, an epoxy compound represented by the following general formula (10): 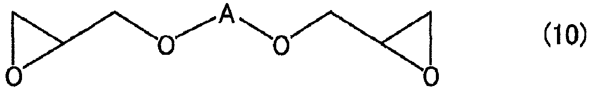 wherein A represents a heterocyclic structural unit is reacted with a compound represented by the following general formula (11).

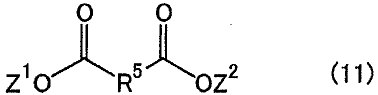

A in general formula (10) is as described above for A in general formula (1), and R⁵, Z¹, and Z² in general formula (11) are as described above for R⁵, Z¹, and Z² in general formula (6).

The same compounds as used in the production of the polyester-type epoxy resin previously described can be used for this epoxy compound of general formula (10).

The compound of general formula (11) is not particularly limited, and examples include blocked carboxylic acids.

Only one of the compounds of general formula (11) may be used, or two or more thereof may be used in combination.

The blocked carboxylic acid may be prepared by any method, for example, by reacting a vinyl ether with a dicarboxylic acid, or by reacting a vinyl carboxylate with a dicarboxylic acid.

There are no particular limitations on the vinyl ether, and examples include ethyl vinyl ether, butyl vinyl ether, isooctyl vinyl ether, isobutyl vinyl ether, cyclohexyl vinyl ether, phenyl vinyl ether, benzyl vinyl ether, phenethyl vinyl ether, 4-vinyloxybutanol, 3,4-dihydro-2H-pyran, 3,4-dihydro-2-methoxy-2H-pyran, and 3-ethoxycarbonyl-5,6-dihydro-2-methyl-4H-pyran.

These vinyl ethers may be used alone or in combinations of two or more.

The vinyl carboxylate is not particularly limited, and examples include divinyl adipate, vinyl acetate, vinyl hexanoate, and vinyl 2-ethylhexanoate.

These vinyl carboxylates may be used alone or in combinations of two or more.

The dicarboxylic acid is not particularly limited, and examples include saturated aliphatic dicarboxylic acids such as oxalic acid, malonic acid, succinic acid, glutaric acid, adipic acid, pimelic acid, suberic acid, azelaic acid, sebacic acid, and tartaric acid; unsaturated aliphatic dicarboxylic acids such as fumaric acid, maleic acid, and itaconic acid; amino acids that are dicarboxylic acids, e.g., aspartic acid and glutamic acid; cycloalkane dicarboxylic acids; cycloalkene dicarboxylic acids such as cis-4-cyclohexene-1, 2-dicarboxylic acid; aromatic dicarboxylic acids such as phthalic acid, isophthalic acid, and terephthalic acid; and heterocyclic dicarboxylic acids such as 2,5-furandicarboxylic acid.

These dicarboxylic acids may be used alone or in combinations of two or more.

The reaction between the dicarboxylic acid and the vinyl ether or vinyl carboxylate may be carried out, for example, by mixing the dicarboxylic acid and the vinyl ether or vinyl carboxylate at a reaction temperature of 20 to 150°C for 0.5 to 48 hours.

A catalyst may be present in the reaction system when the reaction between the dicarboxylic acid and the vinyl ether or vinyl carboxylate is performed.

The catalyst is not particularly limited, and examples include p-toluenesulfonic acid, hydrochloric acid, sulfuric acid, phosphoric acid, and iodine.

These catalysts may be used alone or in combinations of two or more.

The reaction between the epoxy compound of general formula (10) and the compound of general formula (11) may be carried out, for example, by mixing the epoxy compound of general formula (10) and the compound of general formula (11) at a reaction temperature of 50 to 200°C for 0.5 to 48 hours.

A catalyst may be present in the reaction system when the reaction between the epoxy compound of general formula (10) and the compound of general formula (11) is performed.

The catalyst is not particularly limited, and examples include quaternary ammonium salts such as tetramethylammonium chloride and tetramethylammonium bromide, and Lewis acids such as boron trifluoride, triphenylphosphine, zinc chloride, and aluminum chloride.

These catalysts may be used alone or in combinations of two or more.

In the method of producing the modified polyester polyether-type epoxy resin, an epoxy compound represented by the following general formula (10): 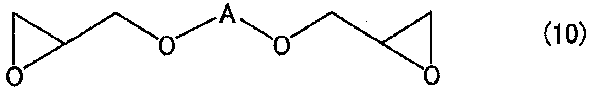 wherein A represents a heterocyclic structural unit is reacted with a compound represented by the following general formula (12).

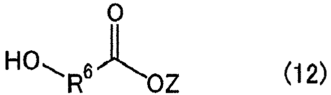

A in general formula (10) is as described above for A in general formula (1), and R⁶ and Z in general formula (12) are as described above for R⁶ and Z in general formula (9).

The same compounds as used in the production of the polyester-type epoxy resin previously described can be used for this epoxy compound of general formula (10).

The compound of general formula (12) is not particularly limited, and examples include blocked hydroxycarboxylic acids.

Only one of the compounds of general formula (12) may be used, or two or more thereof may be used in combination.

The blocked hydroxycarboxylic acid may be prepared by any method, for example, by reacting a vinyl ether with a hydroxycarboxylic acid, or by reacting a vinyl carboxylate with a hydroxycarboxylic acid.

These reactions are carried out using not more than 1 mol of vinyl ether groups in the vinyl ether or of vinyl carboxylate groups in the vinyl carboxylate per mol of carboxyl groups in the hydroxycarboxylic acid. By doing this, the carboxyl group alone of the carboxyl and hydroxyl groups present in the hydroxycarboxylic acid can be caused to selectively react with the vinyl ether or vinyl carboxylate.

There are no particular limitations on the vinyl ether, and examples include ethyl vinyl ether, butyl vinyl ether, isooctyl vinyl ether, isobutyl vinyl ether, cyclohexyl vinyl ether, phenyl vinyl ether, benzyl vinyl ether, phenethyl vinyl ether, 4-vinyloxybutanol, 3,4-dihydro-2H-pyran, 3,4-dihydro-2-methoxy-2H-pyran, and 3-ethoxycarbonyl-5,6-dihydro-2-methyl-4H-pyran.

These vinyl ethers may be used alone or in combinations of two or more.

The vinyl carboxylate is not particularly limited, and examples include divinyl adipate, vinyl acetate, vinyl hexanoate, and vinyl 2-ethylhexanoate.

These vinyl carboxylates may be used alone or in combinations of two or more.

The hydroxycarboxylic acid is not particularly limited, and examples include aromatic hydroxy acids such as salicylic acid, 3-hydroxybenzoic acid, 4-hydroxybenzoic acid, vanillic acid, isovanillic acid, syringic acid, mandelic acid, benzilic acid, coumaric acid, ferulic acid, and sinapinic acid, and aliphatic hydroxy acids such as lactic acid, glycolic acid, 2-hydroxybutyric acid, 3-hydroxybutyric acid, γ-hydroxybutyric acid, mevalonic acid, ricinoleic acid, 4-hydroxycyclohexanecarboxylic acid, and 3-hydroxy-1-adamantanecarboxylic acid.

These hydroxycarboxylic acids may be used alone or in combinations of two or more.

The reaction between the hydroxycarboxylic acid and the vinyl ether or vinyl carboxylate may be carried out, for example, by mixing the hydroxycarboxylic acid and the vinyl ether or vinyl carboxylate at a reaction temperature of 20 to 150°C for 0.5 to 48 hours.

A catalyst may be present in the reaction system when the reaction between the hydroxycarboxylic acid and the vinyl ether or vinyl carboxylate is performed.

The catalyst is not particularly limited, and examples include p-toluenesulfonic acid, hydrochloric acid, sulfuric acid, phosphoric acid, and iodine.

These catalysts may be used alone or in combinations of two or more.

The reaction between the epoxy compound of general formula (10) and the compound of general formula (12) may be carried out, for example, by mixing the epoxy compound of general formula (10) and the compound of general formula (12) at a reaction temperature of 50 to 200°C for 0.5 to 48 hours.

A catalyst may be present in the reaction system when the reaction between the epoxy compound of general formula (10) and the compound of general formula (12) is performed.

The catalyst is not particularly limited, and examples include quaternary ammonium salts such as tetramethylammonium chloride and tetramethylammonium bromide, and Lewis acids such as boron trifluoride, triphenylphosphine, zinc chloride, and aluminum chloride.

These catalysts may be used alone or in combinations of two or more.

In the method of producing an epoxy resin of the present invention, A in general formula (10) is preferably represented by any of formulas (14) to (17). The reason for this is that by means of an epoxy compound or diol having two or more heterocyclic rings located close to one another, an epoxy resin can be obtained that can provide cured products having exceptionally good properties such as surface hardness and heat resistance.

Examples of substituents to replace hydrogen atoms on the carbon chain or ring hydrogen atoms in formulas (14) to (17) include alkyl groups (for example, C₁₋₂₀ alkyl groups such as a methyl group, ethyl group, propyl group, isopropyl group, butyl group, s-butyl group, and t-butyl group); cycloalkyl groups (for example, C₃₋₁₀ cycloalkyl groups such as a cyclopentyl group and cyclohexyl group); cycloalkenyl groups (for example, C₃₋₁₀ cycloalkenyl groups such as a cyclopentel group and cyclohexel group) ; heterocyclic groups (for example, C₂₋₁₀ heterocyclic groups containing heteroatoms such as an oxygen atom, nitrogen atom, and sulfur atom) ; aryl groups [for example, C₆₋₁₀ aryl groups such as a phenyl group and alkylphenyl groups (e.g. a methylphenyl group (tolyl group) and dimethylphenyl group (xylyl group))]; aralkyl groups (for example, C₆₋₁₀ aryl-C₁₋₄ alkyl groups such as a benzyl group and phenethyl group) ; hydrocarbon groups such as a methylene group, vinyl group, and allyl group; alkoxy groups (for example, C₁₋₄ alkoxy groups such as a methoxy group); a hydroxyl group; hydroxy(poly)alkyleneoxy groups (for example, hydroxy(poly)C₂₋₄-alkyleneoxy groups); acyl groups (for example, C₁₋₆ acyl groups such as an acetyl group) ; an oxy group; a thioxy group; a phosphino group; halogen groups (for example, a fluoro group and chloro group) ; an amino group; an imino group; an N-oxide group; a nitro group; and a cyano group. The hydrogen atoms on the carbon chain and the ring hydrogen atoms each may be partially or fully substituted.

### « Epoxy resin composition »

Next, the epoxy resin composition of the present invention will be described.

The epoxy resin composition of the present invention is characterized by containing the epoxy resin of the present invention with a curing agent and/or a curing catalyst.

In the present invention, a curing agent refers to a substance which itself crosslinks during the curing of the epoxy resin composition.

In the present invention, a curing catalyst refers to a substance which accelerates the crosslinking reaction but itself does not crosslink during the curing of the epoxy resin composition.

The curing agent is not particularly limited, and examples include phenol novolac resins, amine compounds, modified polyamines, amino resins, polyaminoamide resins, imidazole compounds, carboxylic acids, acid anhydride compounds, phenols, quaternary ammonium salts, methylol group-containing compounds, blocked isocyanates, mercaptans, triflic acid salts, boron trifluoride ether complex compounds, and boron trifluoride, as well as diazonium salts, sulfonium salts, iodonium salts, benzothiazolium salts, ammonium salts, phosphonium salts, and the like which generate an acid under the action of light or heat.

These curing agents may be used alone or in combinations of two or more.

When the curing agent is used, the equivalence ratio of functional groups in the curing agent to epoxy groups in the epoxy resin is not particularly limited, but is preferably in the range from 0.5 to 2.0 and more preferably in the range from 0.8 to 1.5. When the equivalence ratio is outside the range of 0.5 to 2.0, unreacted epoxy groups or functional groups may remain in the cured product after curing, causing poor curing, a reduction in properties, and a reduction in the reliability of the cured product (for example, deterioration with time).

There are no particular limitations on the curing catalyst, and examples include tertiary amines such as benzyldimethylamine; quaternary ammonium salts such as tetramethylammonium chloride; phosphines such as triphenylphosphine, trioctylphosphine, tricyclohexylphosphine, and tris(2,6-dimethoxyphenyl)phosphine; phosphonium salts such as ethyltriphenylphosphonium bromide and tetraphenylphosphonium tetraphenylborate; phosphine complexes such as triphenylphosphine triphenylborane; imidazoles such as 2-methylimidazole and 2-ethyl-4-methylimidazole; and boron trifluoride complexes.

These curing catalysts may be used alone or in combinations of two or more.

The amount of the curing catalyst, if used, is not particularly limited, but is preferably from 0.1 to 5 parts by weight per 100 parts by weight of the epoxy resin. When the amount of the curing catalyst is less than 0.1 parts by weight, poor curing may occur. At above 5 parts by weight, self-polymerization of epoxy groups may proceed and the curing catalyst may function as a curing agent, so that it may not be possible to obtain a cured product having the desired properties.

The curing agents mentioned above include those which can function as a curing catalyst depending on their content, while the curing catalysts mentioned above include those which can function as a curing agent depending on their content. Since the epoxy resin composition of the present invention may be any composition that contains a curing agent or a curing catalyst, even when a curing agent that can function as a curing catalyst or a curing catalyst that can function as a curing agent is used, their content is not particularly limited.

The epoxy resin composition of the present invention may contain optional components in addition to the epoxy resin, curing agent, and curing catalyst.

Examples of such other optional components include solvents, fillers, modifiers, and flame retardants.

The solvent is not particularly limited, and examples include: alcohols such as methanol and ethanol; ethers such as tetrahydrofuran; glycol ethers such as ethylene glycol monomethyl ether, ethylene glycol monoethyl ether, ethylene glycol monobutyl ether, ethylene glycol dimethyl ether, diethylene glycol monomethyl ether, diethylene glycol monoethyl ether, diethylene glycol dimethyl ether, diethylene glycol diethyl ether, and diethylene glycol monobutyl ether; alkylene glycol monoalkyl ether acetates such as methyl cellosolve acetate, ethyl cellosolve acetate, butyl cellosolve acetate, propylene glycol methyl ether acetate, and 3-methoxybutyl-1-acetate; aromatic hydrocarbons such as toluene and xylene; ketones such as methyl ethyl ketone, methyl isobutyl ketone, methyl amyl ketone, cyclohexanone, and 4-hydroxy-4-methyl-2-pentanone; and esters such as ethyl 2-hydroxypropanoate, methyl 2-hydroxy-2-methylpropanoate, ethyl 2-hydroxy-2-methylpropanoate, ethyl ethoxyacetate, ethyl hydroxyacetate, methyl 2-hydroxy-2-methylbutanoate, methyl 3-methoxypropanoate, ethyl 3-methoxypropanoate, methyl 3-ethoxypropanoate, ethyl 3-ethoxypropanoate, ethyl acetate, butyl acetate, methyl lactate, and ethyl lactate.

These solvents may be used alone or in combinations of two or more.

The amount of the solvent, if used, is not particularly limited, but is preferably from 5 to 70% by weight of the epoxy resin composition.

The filler is not particularly limited, and examples include silicas such as crystalline silica and amorphous silica; conductive fillers such as metals in the form of powder, flakes, fiber or the like, and carbon black, carbon fiber, carbon nanotubes, and graphene; fire retardant fillers such as antimony oxide, magnesium hydroxide, aluminum hydroxide, zinc borate, molybdic acid compounds, tin oxide compounds, phosphorus fillers, zirconium fillers, iron oxide, cuprous oxide, silica, and layered clays; conductive fillers such as barium titanate and lead zirconate titanate; and heat resistance-improving fillers such as organic-inorganic hybrids prepared by the alkoxide sol-gel method.

These fillers may be used alone or in combinations of two or more.

The amount of the filler, if used, is not particularly limited, but is preferably from 0.005 to 50% by weight of the epoxy resin composition.

There are no particular limitations on the modifier, and examples include acrylonitrile-butadiene rubber and silicone powder.

These modifiers may be used alone or in combinations of two or more.

The amount of the modifier, if used, is not particularly limited, but is preferably from 0.005 to 50% by weight of the epoxy resin composition.

There are no particular limitations on the flame retardant, and examples include halogen compounds, phosphorus compounds, and inorganic compounds.

These flame retardants may be used alone or in combinations of two or more.

The amount of the flame retardant, if used, is not particularly limited, but is preferably from 0.005 to 50% by weight of the epoxy resin composition.

### « Cured product »

The cured product of the present invention will be described in the following.

The cured product of the present invention is obtained by curing the epoxy resin composition of the present invention.

The conditions for curing the epoxy resin composition of the present invention may be appropriately selected based on common knowledge in the art. The following conditions may be used as an example: heating for 0.1 to 12 hours at 50 to 250°C using a hot air oven. If necessary, heating may be carried out by raising the temperature in stages to a maximum of 300°C.

Examples of the applications of the cured product (or the epoxy resin composition) include coating materials for coating cans, painted surfaces, optical devices, and the like; fiber-treating agents for sizing, surface treatment, and the like; pressure-sensitive adhesives; adhesives; matrix resins for composite materials such as fiber-reinforced plastics (FRP) and carbon fiber-reinforced plastics (CFRP); and sealants and adhesives for sealing or bonding electronic materials and the like.

Among these applications, coating materials for coating cans, coating materials for coating painted surfaces of building materials, matrix resins for composite materials such as FRP and CFRP, and the like are preferred. The reason for this is that the cured product of the present invention can be suitably used in these applications because it does not undergo discoloration with time due to its excellent weathering resistance and because it has excellent surface hardness, excellent chemical resistance, and excellent toughness.

### EXAMPLES

The present invention is described herebelow by reference to examples, but the present invention is not limited to or by these examples.

### (Preparation of isosorbide diglycidyl ether)

The isosorbide diglycidyl ether used in the production examples given below was prepared as follows.

Epichlorohydrin (760 g) and isosorbide (100 g) were charged at room temperature to a 1-L separable flask. While the mixture was being vigorously stirred, solid sodium hydroxide (60 g) was introduced over one hour at 50°C followed by stirring for 3 hours at the same temperature. After the reaction, water was introduced to dissolve the salt by-product with separation into an organic layer and an aqueous layer. The organic layer was washed 3 times with pure water (100 g) followed by removal of the excess epichlorohydrin under reduced pressure. The resulting residue was filtered to obtain 168 g of isosorbide diglycidyl ether.

The obtained isosorbide diglycidyl ether had the following analytical values: epoxy equivalent weight: 163 g/eq; number-average molecular weight Mn by GPC: 310.

The epoxy equivalent weight was measured in conformity with JIS K 7236. The measurement of molecular weight by GPC was carried out using high-performance liquid chromatography (HPLC) (Waters 2695 from Waters Corporation). The column used was a single Waters styragel (registered trademark) HR 1 THF column connected in series to a single Waters styragel (registered trademark) HR 0.5 THF column (both from Waters Corporation). Tetrahydrofuran was used as the mobile phase at a flow rate of 1.00 mL/minute. The column temperature was 40°C, the detector used was a differential refractometer, and molecular weight was determined relative to polystyrene standards. The measurement of epoxy equivalent weight and the measurement of molecular weight by GPC in the examples below were carried out under the same conditions.

### < Production of epoxy resin >

### (Production Example 1) Production of isosorbide polyester resin A

The isosorbide diglycidyl ether (400 g), cis-4-cyclohexene-1,2-dicarboxylic acid (124 g), and tetramethylammonium chloride (3 g) were charged at room temperature to a 1-L separable flask and the mixture was stirred for 3 hours at 80°C. The reaction mixture was filtered to obtain 490 g of a mixture of isosorbide polyester resin A.

The obtained mixture of isosorbide polyester resin A as a whole had the following analytical values: epoxy equivalent weight: 460 g/eq; number-average molecular weight Mn by GPC: 1172.

### (Production Example 2) Production of isosorbide polyester resin B

The isosorbide diglycidyl ether (400 g), cis-4-cyclohexene-1,2-dicarboxylic acid (66 g), and tetramethylammonium chloride (3 g) were charged at room temperature to a 1-L separable flask and the mixture was stirred for 3 hours at 80°C. The reaction mixture was filtered to obtain 436 g of a mixture of isosorbide polyester resin B.

The obtained mixture of isosorbide polyester resin B as a whole had the following analytical values: epoxy equivalent weight: 292 g/eq; number-average molecular weight Mn by GPC: 409.

### (Production Example 3) Production of isosorbide polyether resin A

The isosorbide diglycidyl ether (400 g), bisphenol F (123 g), and tetramethylammonium chloride (3 g) were charged at room temperature to a 1-L separable flask and the mixture was stirred for 3 hours at 80°C. The reaction mixture was filtered to obtain 489 g of a mixture of isosorbide polyether resin A.

The obtained mixture of isosorbide polyether resin A as a whole had the following analytical values: epoxy equivalent weight: 450 g/eq; number-average molecular weight Mn by GPC: 1209.

### (Production Example 4) Production of isosorbide polyether resin B

The isosorbide diglycidyl ether (400 g), bisphenol F (74 g), and tetramethylammonium chloride (3 g) were charged at room temperature to a 1-L separable flask and the mixture was stirred for 3 hours at 80°C. The reaction mixture was filtered to obtain 444 g of a mixture of isosorbide polyether resin B.

The obtained mixture of isosorbide polyether resin B as a whole had the following analytical values: epoxy equivalent weight: 307 g/eq; number-average molecular weight Mn by GPC: 472.

### (Production Example 5) Production of isosorbide polyurethane resin A

Diphenylmethane diisocyanate (200 g), tetrahydrofuran (400 g), and isosorbide (58 g) were charged at room temperature to a 1-L separable flask and the mixture was stirred until the isosorbide had dissolved. Tetrakis(2,4-pentanedionato)zirconium(IV) (4 g) was introduced to the solution at the same temperature; stirring was carried out for 3 hours; and glycidol (118 g) was then introduced. The resulting mixture was transferred and filtered through filter paper on a Buchner funnel. The resultant solid was washed consecutively with water (100 g) and methanol (300 g). The solid was transferred to a flask and then dried over one hour at 80°C using a rotary evaporator to obtain 314 g of a mixture of isosorbide polyurethane resin A.

The obtained mixture of isosorbide polyurethane resin A as a whole had the following analytical values: epoxy equivalent weight: 325 g/eq; number-average molecular weight Mn by GPC: 1770.

### (Production Example 6) Production of isosorbide polyurethane resin B

Diphenylmethane diisocyanate (200 g), tetrahydrofuran (358 g), and isosorbide (35 g) were charged at room temperature to a 1-L separable flask and the mixture was stirred until the isosorbide had dissolved. Tetrakis(2,4-pentanedionato)zirconium(IV) (4 g) was introduced to the solution at the same temperature; stirring was carried out for 3 hours; and glycidol (118 g) was then introduced. The resulting mixture was transferred and filtered through filter paper on a Buchner funnel. The resultant solid was washed consecutively with water (100 g) and methanol (300 g). The solid was transferred to a flask and then dried over one hour at 80°C using a rotary evaporator to obtain 293 g of a mixture of isosorbide polyurethane resin B.

The obtained mixture of isosorbide polyurethane resin B as a whole had the following analytical values : epoxy equivalent weight: 207 g/eq; number-average molecular weight Mn by GPC: 406.

### (Production Example 7) Production of isosorbide polyester polyether resin

The isosorbide diglycidyl ether (400 g), salicylic acid (89 g), and tetramethylammonium chloride (3 g) were charged at room temperature to a 1-L separable flask and the mixture was stirred for 3 hours at 80°C. The reaction mixture was filtered to obtain 492 g of a mixture of isosorbide polyester polyether resin.

The obtained mixture of isosorbide polyester polyether resin as a whole had the following analytical values: epoxy equivalent weight: 340 g/eq; number-average molecular weight Mn by GPC: 442.

### (Production Example 8) Production of isosorbide modified polyester resin A

Butyl vinyl ether (136 g), cis-4-cyclohexene-1,2-dicarboxylic acid (110 g), and p-toluenesulfonic acid (2 g) were charged at room temperature to a 1-L separable flask and the mixture was stirred for 2 hours at 60°C. To the reaction mixture were added the isosorbide diglycidyl ether (400 g) and tetramethylammonium chloride (3 g) at room temperature and the resulting mixture was then stirred for 6 hours at 100°C. The reaction mixture was filtered to obtain 651 g of a mixture of isosorbide modified polyester resin A.

The obtained mixture of isosorbide modified polyester resin A as a whole had the following analytical values: epoxy equivalent weight: 461 g/eq; number-average molecular weight Mn by GPC: 1130.

### (Production Example 9) Production of isosorbide modified polyester resin B

Butyl vinyl ether (68 g), 3,4-dihydro-2H-pyran (57 g), cis-4-cyclohexene-1,2-dicarboxylic acid (110 g), and p-toluenesulfonic acid (2 g) were charged at room temperature to a 1-L separable flask and the mixture was stirred for 2 hours at 60°C. To the reaction mixture were added the isosorbide diglycidyl ether (400 g) and tetramethylammonium chloride (3 g) at room temperature and the resulting mixture was then stirred for 6 hours at 100°C. The reaction mixture was filtered to obtain 640 g of a mixture of isosorbide modified polyester resin B.

The obtained mixture of isosorbide modified polyester resin B as a whole had the following analytical values: epoxy equivalent weight: 482 g/eq; number-average molecular weight Mn by GPC: 1014.

### (Production Example 10) Production of isosorbide modified polyester resin C

3,4-Dihydro-2H-pyran (114 g), cis-4-cyclohexene-1,2-dicarboxylic acid (110 g), and p-toluenesulfonic acid (2 g) were charged at room temperature to a 1-L separable flask and the mixture was stirred for 2 hours at 60°C. To the reaction mixture were added the isosorbide diglycidyl ether (400 g) and tetramethylammonium chloride (3 g) at room temperature and the resulting mixture was then stirred for 6 hours at 100°C. The reaction mixture was filtered to obtain 598 g of a mixture of isosorbide modified polyester resin C.

The obtained mixture of isosorbide modified polyester resin C as a whole had the following analytical values: epoxy equivalent weight: 434 g/eq; number-average molecular weight Mn by GPC: 852.

### (Production Example 11) Production of isosorbide modified polyester polyether resin A

Butyl vinyl ether (68 g), salicylic acid (89 g), and p-toluenesulfonic acid (2 g) were charged at room temperature to a 1-L separable flask and the mixture was stirred for 2 hours at 60°C. To the reaction mixture were added the isosorbide diglycidyl ether (400 g) and tetramethylammonium chloride (3 g) at room temperature and the resulting mixture was then stirred for 6 hours at 100°C. The reaction mixture was filtered to obtain 630 g of a mixture of isosorbide modified polyester polyether resin A.

The obtained mixture of isosorbide modified polyester polyether resin A as a whole had the following analytical values: epoxy equivalent weight: 440 g/eq; number-average molecular weight Mn by GPC: 880.

### (Production Example 12) Production of isosorbide modified polyester polyether resin B

Butyl vinyl ether (31 g), 3,4-dihydro-2H-pyran (27 g), salicylic acid (89 g), and p-toluenesulfonic acid (2 g) were charged at room temperature to a 1-L separable flask and the mixture was stirred for 2 hours at 60°C. To the reaction mixture were added the isosorbide diglycidyl ether (400 g) and tetramethylammonium chloride (3 g) at room temperature and the resulting mixture was then stirred for 6 hours at 100°C. The reaction mixture was filtered to obtain 556 g of a mixture of isosorbide modified polyester polyether resin B.

The obtained mixture of isosorbide modified polyester polyether resin B as a whole had the following analytical values: epoxy equivalent weight: 418 g/eq; number-average molecular weight Mn by GPC: 824.

### (Production Example 13) Production of isosorbide modified polyester polyether resin C

3,4-Dihydro-2H-pyran (53 g), salicylic acid (89 g), and p-toluenesulfonic acid (2 g) were charged at room temperature to a 1-L separable flask and the mixture was stirred for 2 hours at 60°C. To the reaction mixture were added the isosorbide diglycidyl ether (400 g) and tetramethylammonium chloride (3 g) at room temperature and the resulting mixture was then stirred for 6 hours at 100°C. The reaction mixture was filtered to obtain 520 g of a mixture of isosorbide modified polyester polyether resin C.

The obtained mixture of isosorbide modified polyester polyether resin C as a whole had the following analytical values: epoxy equivalent weight: 432 g/eq; number-average molecular weight Mn by GPC: 910.

### < Evaluation of properties of cured product >

The following curing agent, curing catalyst, solvent, and substrate were used in Examples 1 to 13 and Comparative Examples 1 and 2.
Curing agent: phenol novolac resin (PHENOLITE TD-2090 from DIC Corporation)
Curing catalyst: 2-ethyl-4-methylimidazole (Curezol from Shikoku Chemicals Corporation)
Solvent: methyl ethyl ketone
Substrate: 1 mm-thick aluminum plate (2 mm-thick soda-lime glass plate was used only in the lightfastness test)

### (Examples 1 to 13)

Epoxy resin compositions were prepared by mixing the curing agent, curing catalyst, and solvent with each of the epoxy resin mixtures produced in Production Examples 1 to 13, at the weight ratio shown in Table 1 below.

The obtained epoxy resin compositions were applied to the substrate using a No. 4 bar coater, and then cured by heating for 10 minutes at 85°C and then 60 minutes at 180°C using a hot air oven, to give a cured coating film having a thickness of 2.0 to 4.5 µm. Using the cured coating films thus obtained, the properties were evaluated by the methods described below. The results are shown in Table 1.

### (Comparative Example 1)

An epoxy resin composition was prepared by mixing the curing agent, curing catalyst, and solvent with a bisphenol A epoxy resin (AER-260 from Asahi Kasei Chemicals Corporation, epoxy equivalent weight = 180 g/eq, number-average molecular weight = 462) at the weight ratio shown in Table 1 below.

The obtained epoxy resin composition was cured as mentioned in Examples 1 to 13 to give a cured coating film. Using the obtained cured coating film, the properties were evaluated by the methods described below. The results are shown in Table 1.

### (Comparative Example 2)

An epoxy resin composition was prepared by mixing the curing agent, curing catalyst, and solvent with a low molecular weight isosorbide epoxy resin (epoxy equivalent weight = 163 g/eq, number-average molecular weight = 310) at the weight ratio shown in Table 1 below.

The obtained epoxy resin composition was cured as mentioned in Examples 1 to 13 to give a cured coating film. Using the obtained cured coating film, the properties were evaluated by the methods described below. The results are shown in Table 1.

### < Property evaluation methods >

The properties of the cured coating films in Examples 1 to 13 and Comparative Examples 1 and 2 were evaluated by the following methods.

### 1. Retort treatment (appearance)

The cured coating films were heat-treated in a pressure cooker filled with pure water for one hour at 121°C, followed by visual examination and rating on the following three-point scale.
A: The cured coating film remained transparent and unchanged;
B: The cured coating film turned translucent;
C: The cured coating film turned white.

### 2. Chemical resistance

A rubbing test was run by rubbing back and forth 30 times under a load of 300 g using a rubbing tester with methyl ethyl ketone, followed by rating on the following four-point scale. A+: No scratches were formed;
A: Linear scratches were formed on the surface of the cured coating film;
B: Scratches were formed on the surface of the cured coating film;
C: The cured coating film was peeled.

### 3. Pencil hardness

This was evaluated in conformity with JIS K 5600-5-4.

### 4. Bending resistance test

The test specimens were bent by 90° and changes in the cured products were visually examined and rated on the following four-point scale.
A+: The cured coating film was unchanged;
A: The cured coating film was slightly cracked and/or peeled;
B: The cured coating film was cracked;
C: The cured coating film was peeled.

### 5. Lightfastness test

The cured products were irradiated with light using a xenon lamp (SOLARBOX 3000eRH from CO. FO.ME.GRA.) with an output of 1000 mW/cm² for 100 hours at 80°C, after which the yellowness of the cured products was visually assessed on a three-point scale.
A: The cured coating film did not turn yellow;
B: The cured coating film turned slightly yellow;
C: The cured coating film turned yellow.

**[Table 1]**

| | | | | | Example | | | | | | | | | | | | | Comparative Example | |
|---|---|---|---|---|---|---|---|---|---|---|---|---|---|---|---|---|---|---|---|
| | | | Epoxy equivalent weight (g/eq) | Number-average molecular weight (Mn) | 1 | 2 | 3 | 4 | 5 | 6 | 7 | 8 | 9 | 10 | 11 | 12 | 13 | 1 | 2 |
| | | Isosorbide polyester resin A | 460 | 1172 | 100 | | | | | | | | | | | | | | |
| | | Isosorbide polyester resin B | 292 | 409 | | 100 | | | | | | | | | | | | | |
| | | Isosorbide polyether resin A | 450 | 1209 | | | 100 | | | | | | | | | | | | |
| | | Isosorbide polyether resin B | 307 | 472 | | | | 100 | | | | | | | | | | | |
| | | Isosorbide polyurethane resin A | 325 | 1770 | | | | | 100 | | | | | | | | | | |
| | | Isosorbide polyurethane resin B | 207 | 406 | | | | | | 100 | | | | | | | | | |
| | Epoxy resin | Isosorbide polyester polyether resin | 340 | 442 | | | | | | | 100 | | | | | | | | |
| | | Isosorbide modified polyester resin A | 461 | 1130 | | | | | | | | 100 | | | | | | | |
| | | Isosorbide modified polyester resin B | 482 | 1014 | | | | | | | | | 100 | | | | | | |
| Composition | | Isosorbide modified polyester resin C | 434 | 852 | | | | | | | | | | 100 | | | | | |
| | | Isosorbide modified polyester polyether resin A | 440 | 880 | | | | | | | | | | | 100 | | | | |
| | | Isosorbide modified polyester polyether resin B | 418 | 824 | | | | | | | | | | | | 100 | | | |
| | | Isosorbide modified polyester polyether resin C | 432 | 910 | | | | | | | | | | | | | 100 | | |
| | | Bisphenol A epoxy resin | 180 | 462 | | | | | | | | | | | | | | 100 | |
| | | Low molecular weight isosorbide epoxy resin | 163 | 310 | | | | | | | | | | | | | | | 100 |
| | Curing agent | Phenol novolac resin | | | 20 | 32 | 21 | 31 | 29 | 46 | 28 | 20 | 20 | 22 | 21 | 23 | 22 | 51 | 61 |
| | Curing catalyst | 2-Ethyl-4-methylimidazole | | | 1 | 1 | 1 | 1 | 1 | 1 | 1 | 1 | 1 | 1 | 1 | 1 | 1 | 1 | 1 |
| | Solvent | Methyl ethyl ketone | | | 127 | 136 | 122 | 134 | 130 | 150 | 131 | 124 | 123 | 125 | 125 | 126 | 125 | 152 | 162 |
| Properties of cured product | Retort treatment (appearance) | | | | A | A | A | A | A | A | A | A | A | A | A | A | A | C | A |
| | Chemical resistance | | | | A+ | A+ | A+ | A+ | A+ | A+ | A+ | A+ | A+ | A+ | A+ | A+ | A+ | A | A |
| | Pencil hardness | | | | H | 5H | 4H | 7H | 4H | 7H | 3H | 3H | 4H | 3H | 2H | 3H | 3H | B | 2H |
| | Bending resistance test | | | | A+ | A+ | A | A | A | A | A | A+ | A | A | A+ | A | A | C | A |
| | Lightfastness test | | | | A | A | B | B | B | B | B | A | A | A | B | A | A | C | B |

## Claims

1. An epoxy resin, represented by the following general formula (1): 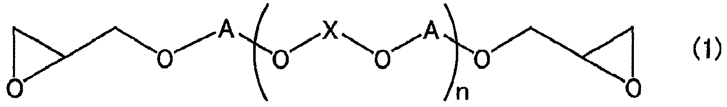 wherein A represents a heterocyclic structural unit;
X represents any one structure selected from the group consisting of the following general formulas (2) to (6) and (9) : 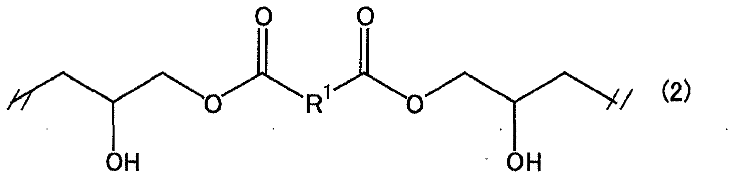 wherein R¹ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 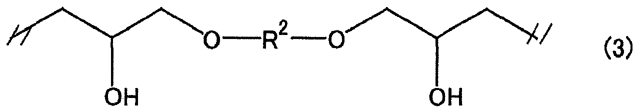 wherein R² represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 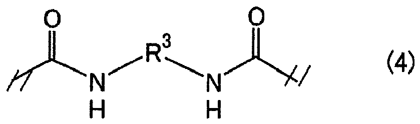 wherein R³ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 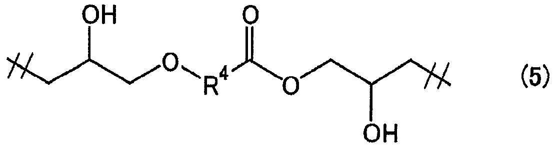 wherein R⁴ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, 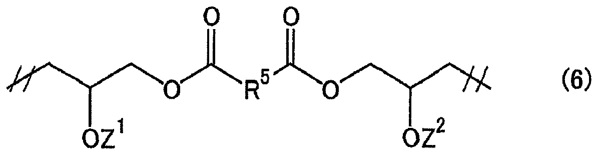 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 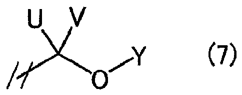 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 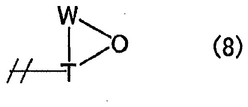 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and 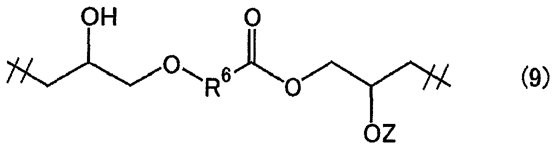 wherein R⁶ represents a single bond; a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents a structure represented by the following general formula (7) or general formula (8): 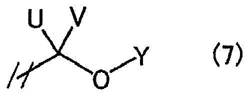 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 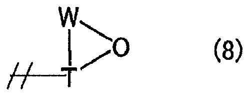 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; and
n represents 0.5 to 200,
the epoxy resin having a number-average molecular weight of 400 to 100,000.

2. The epoxy resin according to claim 1, obtained by: reacting an epoxy compound represented by the following general formula (10): 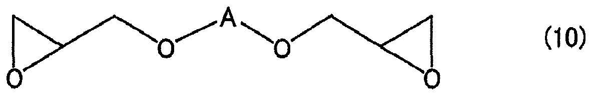 wherein A represents a heterocyclic structural unit,
with a dicarboxylic acid compound, a polyol compound, a hydroxycarboxylic acid, a compound represented by the following general formula (11): 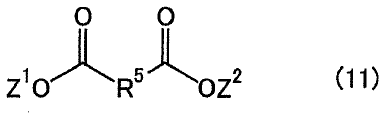 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 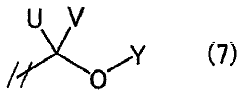 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 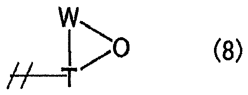 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted,
or a compound represented by the following general formula (12) : 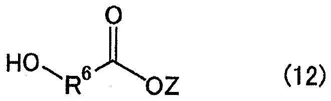 wherein R⁶ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents H or a structure represented by the following general formula (7) or general formula (8): 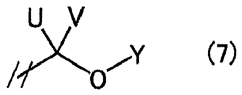 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and
the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 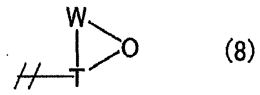 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, or
reacting a diisocyanate with a heterocyclic diol represented by the following general formula (13):
HO-A-OH (13)
wherein A represents a heterocyclic structural unit; and
further reacting the resulting product with a compound containing an epoxy group and a hydroxyl group or an epihalohydrin.

3. The epoxy resin according to claim 1 or 2, wherein A is represented by any of the following formulas (14) to (17) : 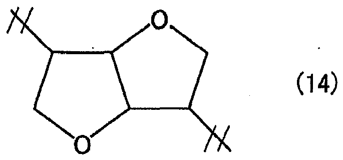 wherein the ring hydrogen atoms may be partially or fully substituted, 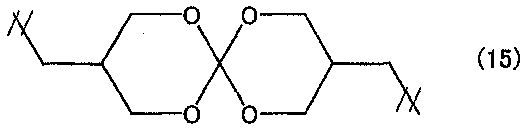 wherein the ring hydrogen atoms and the hydrogen atoms on the carbon chain each independently may be partially or fully substituted, 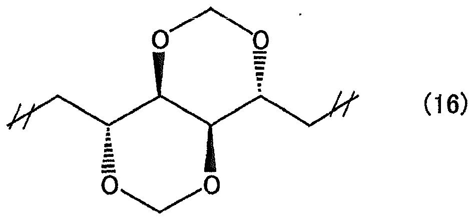 wherein the ring hydrogen atoms and the hydrogen atoms on the carbon chain each independently may be partially or fully substituted, and 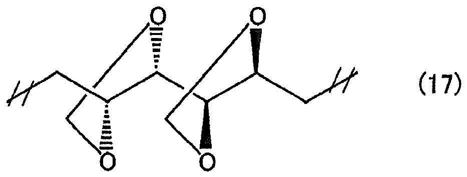 wherein the ring hydrogen atoms and the hydrogen atoms on the carbon chain each independently may be partially or fully substituted.

4. A method of producing an epoxy resin, comprising:
reacting an epoxy compound represented by the following general formula (10): 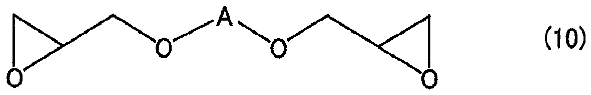 wherein A represents a heterocyclic structural unit,
with a dicarboxylic acid compound, a polyol compound, a hydroxycarboxylic acid, a compound represented by the following general formula (11): 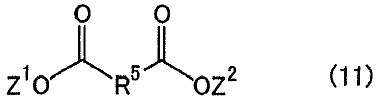 wherein R⁵ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z¹ and Z² each independently represent H or a structure represented by the following general formula (7) or general formula (8), provided that at least one of Z¹ or Z² is a structure represented by the following general formula (7) or general formula (8): 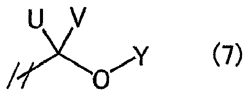 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 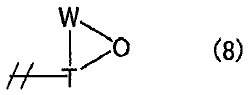 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted,
or a compound represented by the following general formula (12): 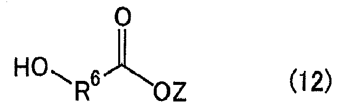 wherein R⁶ represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Z represents H or a structure represented by the following general formula (7) or general formula (8): 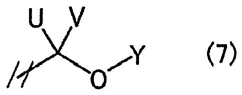 wherein V and U each independently represent hydrogen or a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, and
Y represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, 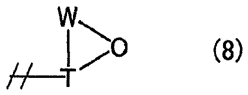 wherein W represents a C1-20 acyclic hydrocarbon group in which the carbon chain may be straight or branched, the carbon atoms may be partially replaced by heteroatoms, and the hydrogen atoms on the carbon chain may be partially or fully substituted; a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted; or a group formed by introducing a carbonyl group into the C1-20 acyclic hydrocarbon group or the C3-20 cyclic hydrocarbon group, and
T represents a C1-20 acyclic hydrocarbon group in which the carbon chain may be straight or branched, the carbon atoms may be partially replaced by heteroatoms, and the hydrogen atoms on the carbon chain may be partially or fully substituted; or a C3-20 cyclic hydrocarbon group in which the ring system may be a monocyclic, fused, or spiro ring system or may contain both fused and spiro rings, the carbon atoms may be partially replaced by heteroatoms, and the ring hydrogen atoms may be partially or fully substituted, or
reacting a diisocyanate with a heterocyclic diol represented by the following general formula (13):
HO-A-OH (13)
wherein A represents a heterocyclic structural unit; and
further reacting the resulting product with a compound containing an epoxy group and a hydroxyl group or an epihalohydrin.

5. The method of producing an epoxy resin according to claim 4, wherein A is represented by any of the following formulas (14) to (17): 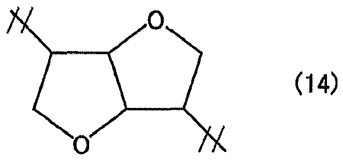 wherein the ring hydrogen atoms may be partially or fully substituted, 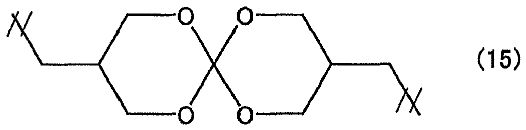 wherein the ring hydrogen atoms and the hydrogen atoms on the carbon chain each independently may be partially or fully substituted, 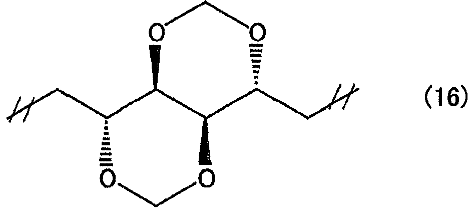 wherein the ring hydrogen atoms and the hydrogen atoms on the carbon chain each independently may be partially or fully substituted, and 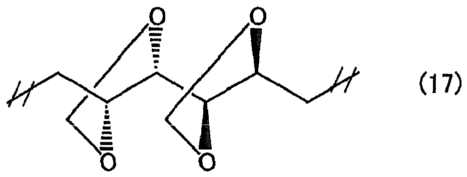 wherein the ring hydrogen atoms and the hydrogen atoms on the carbon chain each independently may be partially or fully substituted.

6. An epoxy resin composition, comprising the epoxy resin according to any one of claims 1 to 3 with a curing agent and/or a curing catalyst.

7. A cured product, obtained by curing the epoxy resin composition according to claim 6.
